# EUROPEAN PATENT SPECIFICATION

(11) **EP 3 316 015 B1**
(45) Date of publication and mention of the grant of the patent: **02.08.2023**
(21) Application number: 17020118.0
(22) Date of filing: 28.03.2017
(51) Int. Cl.: G02B 6/44

(54) **AIR BLOWN OPTICAL FIBER CABLE**
LUFTGEBLASENES GLASFASERKABEL
CÂBLE DE FIBRE OPTIQUE INSTALLÉ PAR SOUFFLAGE D'AIR

(30) Priority: 26.10.2016 IN 201621036747
(43) Date of publication of application: 02.05.2018
(73) Proprietor: Sterlite Technologies Ltd, Maharashtra 431 136 (IN)
(72) Inventor: Sahoo, Kishore, 431136 Maharashtra (IN); Pardeshi, Prasanna, 431136 Maharashtra (IN); Kumar, Sravan, 431136 Maharashtra (IN); Shukla, Vikash, 431136 Maharashtra (IN)
(74) Representative: Petraz, Gilberto Luigi

(56) References cited:
- WO-A2-2016/039952
- US-A1- 2005 098 342
- US-A1- 2005 238 300
- US-A1- 2012 099 825
- US-A1- 2016 274 324

## Description

### TECHNICAL FIELD

The present disclosure relates to the field of optical fiber cables and more specifically, the present disclosure relates to an air blown optical fiber cable for indoor and outdoor applications.

### BACKGROUND

Over the last few years, optical fiber cables have played an important role in building network of modern communication systems across the world. One such type of optical fiber cables are air blown optical fiber cables. These air blown optical fiber cables are used for various indoor-outdoor applications. Typically, the structure of these air blown optical fiber cables include a central loose tube enclosing optical fibers. The central loose tube is enclosed by a sheathing layer for providing protection to the air blown optical fiber cables. Typically, the air blown optical fiber cables have small diameter and are light in weight. The air blown optical fiber cables are installed in ducts/micro duct. Traditionally, the air blown optical fiber cables are installed by blowing the optical fiber cable into a duct/micro duct while simultaneously pushing the optical cable into the duct. The blowing is done by injecting a high volume of compressed air into the duct which flows inside the duct at high speed. Accordingly, the high speed air propels the optical fiber cable further inside the duct. The optical fiber cable is blown with a cable blowing machine.

Several optical fiber cables are available in the prior art which are used for installation in ducts.

In PCT application number WO2016046586, an optical fiber cable with retractable modules is provided. The optical fiber cable includes a number of modules placed inside a cavity of the optical fiber cable. Each of the modules is defined along an axis of revolution that is substantially parallel to the axis of revolution of the optical fiber cable. The modules are enclosed by an outer sheath which is a reinforced plastic tube. Further, each of the modules is a tube formed by co-extrusion of an outer polyamide layer and an inner polycarbonate layer bonded with each other. Each of the modules includes four optical fibers with a diameter in a range of 245µη 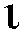 ±10µη 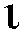 . Furthermore, the outer polyamide layer has a thickness in a range of 0.05 mm - 0.15 mm and the inner polycarbonate layer has a thickness of 0.2 mm. The currently available air blown optical fiber cables have certain limitations. The conventional air blown optical fiber cables can be blown for a limited distances of around 1200 meters.

These optical fiber cables are not able to fulfill the demand of the customers as these cables do not have optimum stiffness and flexibility to blow for longer distances. Furthermore, the process to manufacture these air blown optical fiber cables is complex. This increases the manufacturing cost of the air blown optical fiber cables. Also, the above mentioned prior art cable is not suitable for blowing purposes.

US 2005/238300 A1 discloses optical fiber telecommunication cables which provide reduced friction when installed in conduits.

In light of the foregoing discussion, there exists a need for an optical fiber cable which overcomes the above cited drawbacks of conventionally known optical fiber cables.

### SUMMARY

According to one embodiment, an optical fiber cable comprises a plurality of optical fibers, a first layer and a second layer. The plurality of optical fibers lie substantially along a longitudinal axis of the optical fiber cable. The first layer has a hardness of around 120 Rockwell. The first layer surrounds the plurality of optical fibers. The second layer has a hardness of around 106 Rockwell. The second layer surrounds the first layer. The first layer is made of a thermoplastic material. Further, the first layer has a thickness in a range of 0.2 - 0.3 millimeter. The second layer is made of a polymeric material. The second layer has a thickness in a range of 0.2-0.3 millimeter. The optical fiber cable has a diameter in a range of about 1.5 millimeters to about 3 millimeters. In addition, the optical fiber cable can be blown for about 1.5-2 kilometers. The optical fiber cable has a weight in a range of 3-6 kg/km. Weight depends upon different fiber count and cable dimensions. The optical fiber cable 100 has at most a fill factor of 85 percent. Fill factor is achieved because of materials used as well as dimensions. The optical fiber cable has a crush resistance of about 800 Newton/10 centimeters and passes impact test. The optical fiber cable has impact strength of 3 Nm.

Embodiments of the present disclosure substantially eliminate or at least partially address the aforementioned problems in the prior art, and provides an optical fiber cable for indoor and outdoor applications. The optical fiber cable can be blown for long distances. The long blowing distance is due to the combination of the materials used for the first layer and the second layer.

The combination of materials enables the optical fiber cable to have optimum stiffness and flexibility to be blown for longer distances. This enables the optical fiber cables to be used for various applications requiring larger blowing distance of the optical fiber cable. The buffer tube step utilizes co-extrusion process and simplifies the manufacturing process of the optical fiber cable and decreases a cost of manufacturing of the optical fiber cable.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

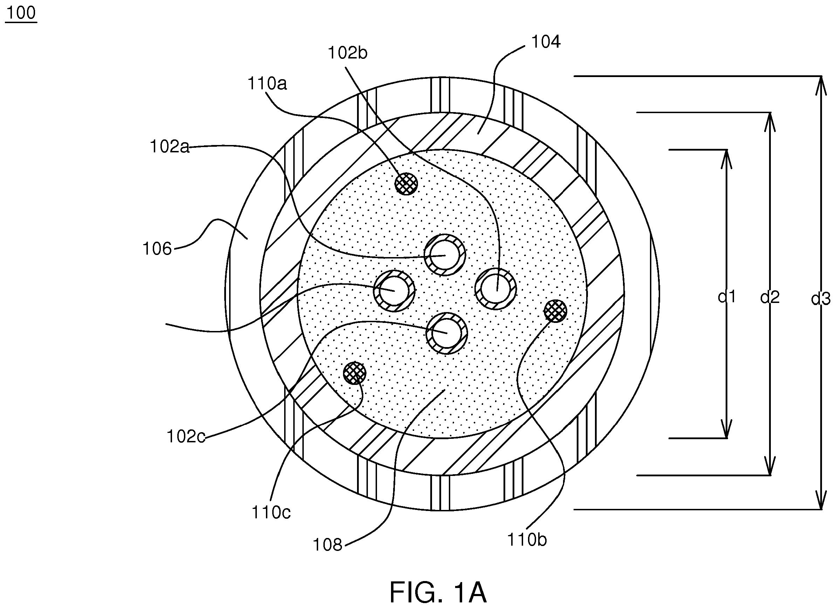

FIG. 1A illustrates a cross sectional view of an optical fiber cable, in accordance with an embodiment of the present disclosure;

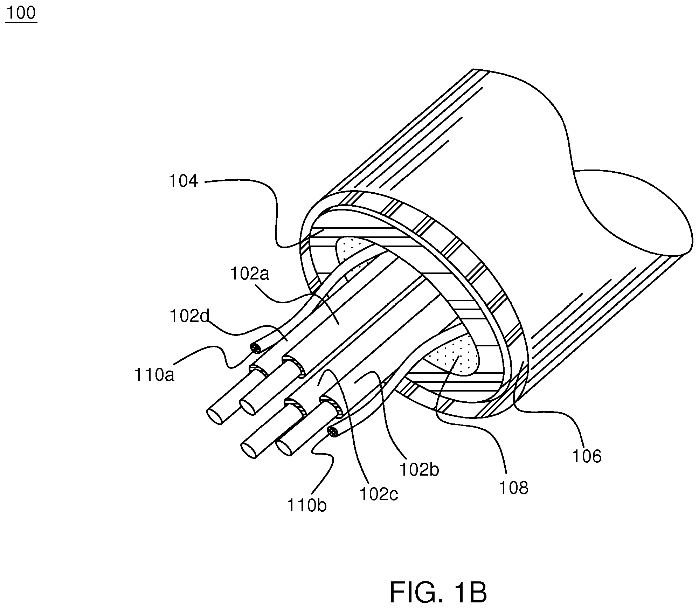

FIG. 1B illustrates a perspective view of the optical fiber cable of FIG. 1A, in accordance with an embodiment of the present disclosure;

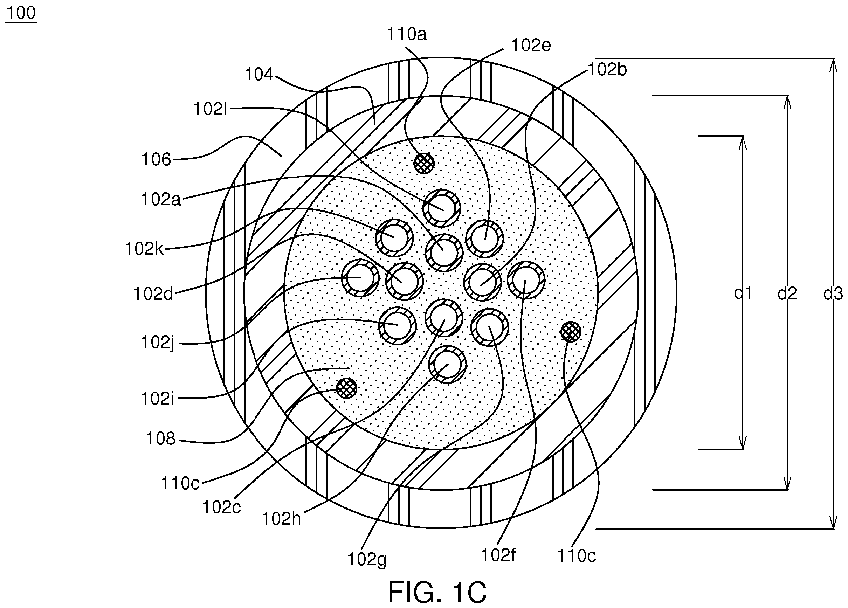

FIG. 1C illustrates another cross sectional view of an optical fiber cable, in accordance with another embodiment of the present disclosure;

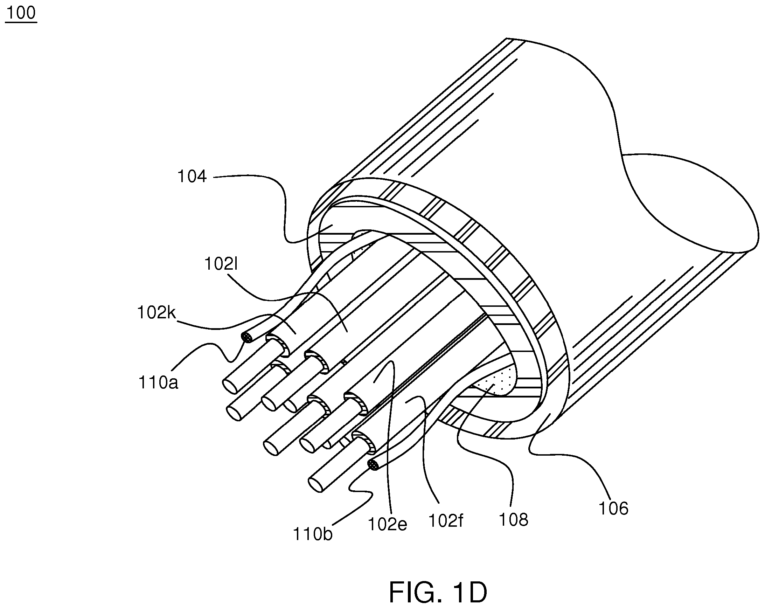

FIG. 1D illustrates a perspective view of the optical fiber cable of FIG. 1C, in accordance with another embodiment of the present disclosure; and

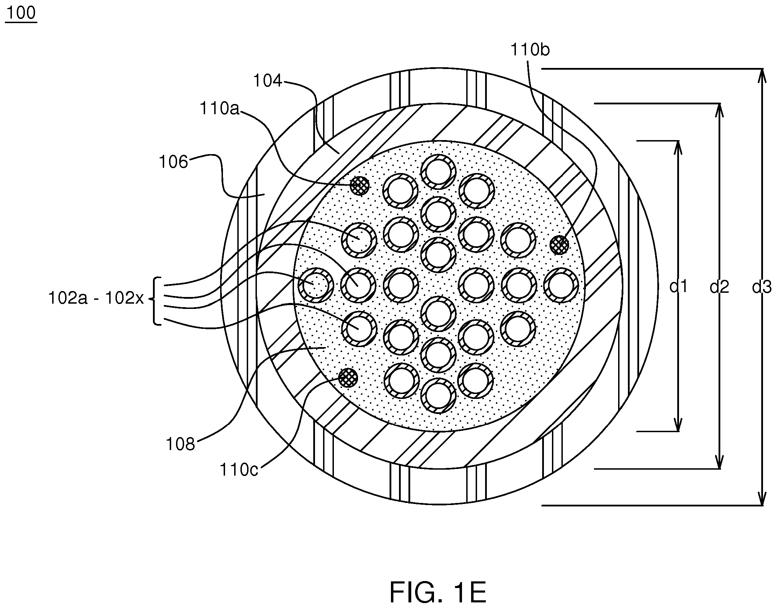

FIG. 1E illustrates yet another cross sectional view of an optical fiber cable, in accordance with yet another embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

**FIG. 1A** illustrates a cross sectional view of an optical fiber cable **100,** in accordance with an embodiment of the present disclosure. The optical fiber cable **100** is an air blown optical fiber cable. The air blown optical fiber cable is used for installation in micro ducts. In addition, the optical fiber cable **100** is used for indoor and outdoor applications. The optical fiber cable **100** is a dual buffer tube design cable (explained in detail below in the patent application). The optical fiber cable **100** eliminates the use of a sheathing layer around buffer tubes. According to an embodiment, the optical fiber cable **100** is a 4F optical fiber cable. In addition, 4F corresponds to 4 optical fibers. According to another embodiment, the optical fiber cable **100** is a 12F optical fiber cable (as shown in **FIG. 1C** and **FIG. 1D**). In addition, 12F corresponds to 12 optical fibers. According to yet another embodiment, the optical fiber cable **100** is a 24F optical fiber cable (as shown in **FIG. 1E**). In addition, 24F corresponds to 24 optical fibers.

The optical fiber cable **100** includes a plurality of optical fibers **102a-102d,** a first layer **104,** a second layer **106** and a gel 108 (as seen in **FIG. 1A** in conjunction with the perspective view of the optical fiber cable **100** provided in **FIG. 1B**). The optical fiber cable **100** is used to transmit optical signals (which may carry sensor data or communication data). The optical fiber cable **100** is configured to be blown for about 1.5-2 kilometers (discussed below in the patent application).

The plurality of optical fibers **102a-102d** is positioned inside a core of the optical fiber cable **100.** In addition, the plurality of optical fibers **102a-102d** lies substantially along a longitudinal axis of the optical fiber cable **100.** Each of the plurality of optical fibers **102a-102d** is a fiber used for transmitting information as light pulses from one end to another. In addition, each of the plurality of optical fibers **102a-102d** is a thin strand of glass capable of transmitting optical signals. Also, each of the plurality of optical fibers **102a-102d** is configured to transmit large amounts of information over long distances with relatively low attenuation. Further, each of the plurality of optical fibers **102a-102d** includes a core region and a cladding region. The core region is an inner part of an optical fiber and the cladding section is an outer part of the optical fiber. Moreover, the core region is defined by a central longitudinal axis of each of the plurality of optical fibers **102a-102d.** In addition, the cladding region surrounds the core region.

In an embodiment, each of the plurality of optical fibers **102a-102d** has a diameter of about 200 microns. In another embodiment, each of the plurality of optical fibers **102a-102d** has a diameter of about 250 microns. In yet another embodiment, the diameter of the plurality of optical fibers **102a-102d** is in a range of 200 µm ± 10 µm. In yet another embodiment, the diameter of the plurality of optical fibers **102a-102d** is in a range of 250 µm ± 10 µm. In yet another embodiment, the diameter of each of the plurality of optical fibers **102a-102d** may vary. In an embodiment of the present disclosure, each of the plurality of optical fibers **102a-102d** is a single mode fiber. In another embodiment of the present disclosure, each of the plurality of optical fibers **102a-102d** is a multimode fiber. In an embodiment, each of the plurality of optical fibers **102a-102d** is a G.657 A1 ITU.T standard fiber. In another embodiment, each of the plurality of optical fibers **102a-102d** is a G.657 A2 ITU.T standard fiber.

In an embodiment, the number of the plurality of optical fibers **102a-102d** in the optical fiber cable **100** is 4. In another embodiment, the number of the plurality of optical fibers **102a-1021** of the optical fiber cable **100** is 12 (as seen in **FIG. 1C** in conjunction with the perspective view of the optical fiber cable **100** provided in **FIG. 1D**). In yet another embodiment, the number of the plurality of optical fibers **102a-102d** may vary. In yet another embodiment of the present disclosure, the number of the plurality of optical fibers **102a-102d** is in a range of 1-24.

In an embodiment, each of the plurality of optical fibers **102a-102d** is a colored optical fiber. In an embodiment, each of the plurality of optical fibers **102a-102d** has a different color. In another embodiment, the total number of colors available for coloring the optical fibers is 12. The coloring is done for identification of each of the plurality of optical fibers **102a-102d.** The colors include blue, orange, green, brown, gray, white, red, black, yellow, violet, pink and aqua. In an embodiment, the color repeats when the number of the plurality of optical fibers exceed more than 12. In an embodiment, the colors used for coloring the 4 optical fibers are red, green, blue and yellow.

In an embodiment, each of the plurality of optical fibers **102a-102d** is placed loosely inside the core of the optical fiber cable **100**. In an embodiment of the present disclosure, each of the plurality of optical fibers includes a coating. The coating is made of a material selected from a group. The group consists of low smoke zero halogen, polyvinyl chloride, Polyamide 12 / Nylon 12, thermoplastic urethane and thermoplastic elastomers. In an embodiment of the present disclosure, the coating has a diameter of about 900 microns. In another embodiment, the coating has a diameter of about 600 microns. In an embodiment, the number of tight buffers is 1 when the coating has the diameter of 900 microns. In another embodiment, the number of tight buffers can be 2 when the coating has the diameter of 600 microns. In another embodiment, the plurality of optical fibers may not include a coating.

In an embodiment, the plurality of optical fibers **102a-102d** has a fiber attenuation of about 0.35 dB/km at a wavelength of 1330 nanometers. In an embodiment, the plurality of optical fibers **102a-102d** has a fiber attenuation of about 0.2 dB/km at a wavelength of 1550 nanometers. In an embodiment, the plurality of optical fibers **102a-102d** has a fiber attenuation of about 0.24 dB/km at a wavelength of 1625 nanometers. The fiber attenuation corresponds to a loss in optical power as the light travels through the optical fiber. In an embodiment, the plurality of optical fibers **102a-102d** has a polarization mode dispersion of less than or equal to 0.2 ps/ √km. The polarization mode dispersion corresponds to spreading of optical signals when the two different polarizations of light in a waveguide travel at different speeds.

The first layer **104** surrounds the plurality of optical fibers **102a-102d.** The first layer **104** lies substantially parallel to the longitudinal axis of the optical fiber cable **100.** Furthermore, the first layer **104** is a loose buffer tube layer. The first layer **104** has a hardness of around 120 Rockwell. In general, the Rockwell scale is a hardness scale based on indentation of a material. The Rockwell hardness determines the hardness of a material by indenting a material under examining until an impression is formed over the material. The first layer **104** is made of a thermoplastic material. In general, the thermoplastic material is a material which becomes soft when heated and hard when cooled. In an embodiment, the thermoplastic material is polycarbonate. In general, polycarbonates are a group of thermoplastic elastomers containing carbonate groups in chemical structure. Polycarbonate has a hardness of around 120 Rockwell. In an embodiment, the polycarbonate material has a tensile strength of about 64 megapascals and young modulus of about 1900 megapascals. In an embodiment, the first layer **104** is made of any other suitable material. In addition, a cross section of the first layer **104** is circular in shape.

The first layer **104** is characterized by a thickness. In an embodiment of the present disclosure, the thickness of the first layer **104** for the 4F cable design and the 12F cable design is same. The first layer **104** has a thickness in a range of 0.2-0.3 millimeter. In an embodiment, the first layer **104** has a thickness in a range of 0.2-0.3 millimeter when the number of the plurality of optical fibers **102a-102d** is 4. In another embodiment, the thickness of the first layer **104** may vary when the number of the plurality of optical fibers **102a-102d** is 4. In an embodiment, the first layer **104** has a thickness in a range of 0.2-0.30 millimeter when the number of the plurality of optical fibers **102a-1021** is 12. In another embodiment, the thickness of the first layer **104** may vary when the number of the plurality of optical fibers **102a-1021** is 12. In an embodiment of the present disclosure, the first layer **104** has a thickness in a range of 0.2-0.30 millimeter when the number of the plurality of optical fibers **102a-102x** is 24.

The first layer **104** has a first diameter d₁ and a second diameter d₂. The first diameter d₁ of the first layer **104** is an inner diameter of the first layer **104.** The second diameter d₂ of the first layer **104** is an outer diameter of the first layer **104.** In an embodiment of the present disclosure, the first diameter d₁ and the second diameter d₂ of the first layer **104** is different for the 4F cable design and the 12F cable design.

In an embodiment, the first layer **104** has a first diameter d₁ in a range of 0.7-0.9 millimeter when a number of the plurality of optical fibers is 4 and each of the plurality of optical fibers has a diameter of 250 microns. In another embodiment, the first diameter d₁ of the first layer **104** may vary when the number of the plurality of optical fibers is 4 and each of the plurality of optical fibers has the diameter of 250 microns. In an embodiment, the first layer **104** has a second diameter d₂ in a range of 1.1-1.5 millimeter when a number of the plurality of optical fibers is 4 and each of the plurality of optical fibers has a diameter of 250 microns. In another embodiment, the second diameter d₂ of the first layer **104** may vary when the number of the plurality of optical fibers is 4 and each of the plurality of optical fibers has the diameter of 250 microns. In an embodiment, the first layer **104** has a first diameter d₁ in a range of 0.6-0.7 millimeter when a number of the plurality of optical fibers is 4 and each of the plurality of optical fibers has a diameter of 200 microns. In an embodiment, the first layer **104** has a second diameter d₂ in a range of 1.0-1.3 millimeter when a number of the plurality of optical fibers is 4 and each of the plurality of optical fibers has a diameter of 200 microns. In another embodiment, the first diameter d₁ of the first layer **104** and the second diameter d₂ of the first layer **104** may vary when a number of the plurality of optical fibers is 4 and each of the plurality of optical fibers has a diameter of 200 microns.

In an embodiment, the first layer **104** has a first diameter d₁ in a range of 1.1-1.3 millimeter when a number of the plurality of optical fibers is 12 and each of the plurality of optical fibers has a diameter of 250 microns. In an embodiment, the first layer **104** has a second diameter d₂ in a range of 1.5-1.9 millimeter when a number of the plurality of optical fibers is 12 and each of the plurality of optical fibers has a diameter of 250 microns. In another embodiment, the first diameter d₁ of the first layer **104** and the second diameter d₂ of the first layer **104** may vary when a number of the plurality of optical fibers is 12 and each of the plurality of optical fibers has a diameter of 250 microns. In an embodiment, the first layer **104** has a first diameter d₁ in a range of 0.95-1.15 millimeter when a number of the plurality of optical fibers is 12 and each of the plurality of optical fibers has a diameter of 200 microns. In an embodiment, the first layer **104** has a second diameter d₂ in a range of 1.35-1.75 millimeter when a number of the plurality of optical fibers is 12 and each of the plurality of optical fibers has a diameter of 200 microns. In another embodiment, the first diameter d₁ of the first layer **104** and the second diameter d₂ of the first layer **104** may vary when a number of the plurality of optical fibers is 12 and each of the plurality of optical fibers has a diameter of 200 microns.

In an embodiment, the first layer **104** has a first diameter d₁ in a range of 1.6-1.9 millimeter when a number of the plurality of optical fibers is 24 and each of the plurality of optical fibers has a diameter of 250 microns. In an embodiment, the first layer **104** has a second diameter d₂ in a range of 2-2.5 millimeters when a number of the plurality of optical fibers is 24 and each of the plurality of optical fibers has a diameter of 250 microns. In another embodiment, the first diameter d₁ of the first layer **104** and the second diameter d₂ of the first layer **104** may vary when a number of the plurality of optical fibers is 24 and each of the plurality of optical fibers has a diameter of 250 microns. In an embodiment, the first layer **104** has a first diameter d₁ in a range of 1.3-1.6 millimeter when a number of the plurality of optical fibers is 24 and each of the plurality of optical fibers has a diameter of 200 microns. In an embodiment, the first layer **104** has a second diameter d₂ in a range of 1.7-2.2 millimeters when a number of the plurality of optical fibers is 24 and each of the plurality of optical fibers has a diameter of 200 microns. In another embodiment, the first diameter d₁ of the first layer **104** and the second diameter d₂ of the first layer **104** may vary when a number of the plurality of optical fibers is 24 and each of the plurality of optical fibers has a diameter of 200 microns.

The second layer **106** surrounds the first layer **104.** In addition, the second layer **106** concentrically surrounds the first layer **104.** Furthermore, the second layer **106** is a loose buffer tube layer. The second layer **106** has a hardness of around 106 Rockwell. The second layer **106** is made of a polymer material. In an embodiment of the present disclosure, the polymer material is Polyamide 12 / Nylon 12. Polyamide 12/Nylon 12 has a hardness of around 106 Rockwell. In general, the polyamide-12 is a semi crystalline polymer containing repeated amide linkages. In an embodiment of the present disclosure, the polyamide-12 material has a tensile strength of about 40 megapascals and young modulus of about 1300 megapascals. Further, the use of Polyamide 12 / Nylon 12 for the second layer **106** provides less friction between the duct in which the optical fiber cable **100** is blown and the second layer **106.** In an embodiment of the present disclosure, the second layer **106** is made of any other suitable material. The suitable material must provide reduction in friction between the duct and the optical fiber cable **100.** The first layer **104** and the second layer **106** constitute the dual layer buffer tube design of the optical fiber cable **100.** In addition, a cross section of the second layer **106** is circular in shape.

The second layer **106** is characterized by a thickness. In an embodiment of the present disclosure, the thickness of the second layer **106** for the 4F cable design and the 12F cable design is same. The thickness of the second layer **106** and the first layer **104** is same. In an embodiment of the present disclosure, the thickness of the second layer **106** is kept close to the thickness of the first layer **104** as polycarbonate is brittle in nature and cracks on impact. The second layer **106** has a thickness in a range of 0.2-0.30 millimeter. In an embodiment of the present disclosure, the second layer **106** has a thickness in a range of 0.2-0.3 millimeter when the number of the plurality of optical fibers **102a-102d** is 4. In an embodiment of the present disclosure, the second layer **106** has a thickness of about 0.2 millimeter when the number of the plurality of optical fibers **102a-102d** is 4. In yet another embodiment of the present disclosure, the thickness of the second layer **106** may vary when the number of the plurality of optical fibers **102a-102d** is 4.

In an embodiment, the second layer **106** has a thickness in a range of 0.2-0.3 millimeter when the number of the plurality of optical fibers **102a-1021** is 12. In another embodiment of the present disclosure, the thickness of the second layer **106** may vary when the number of the plurality of optical fibers **102a-1021** is 12. In an embodiment of the present disclosure, the second layer 106 has a thickness in a range of 0.2-0.3 millimeter when the number of the plurality of optical fibers **102a-102x** is 24.

The second layer **106** is characterized by a first diameter d₃. The first diameter d₃ is an outer diameter of the second layer **106.** In an embodiment of the present disclosure, the second layer **106** has a first diameter d₃ in a range of 1.5-2.1 millimeters when a number of the plurality of optical fibers is 4 and each of the plurality of optical fibers has a diameter of 250 microns. In another embodiment of the present disclosure, the first diameter d₃ of the second layer **106** may vary when the number of the plurality of optical fibers is 4 and each of the plurality of optical fibers has a diameter of 250 microns. In an embodiment of the present disclosure, the second layer has a first diameter d₃ in a range of 1.4-1.9 millimeter when a number of the plurality of optical fibers is 4 and each of the plurality of optical fibers has a diameter of 200 microns. In another embodiment of the present disclosure, the first diameter d₃ of the second layer **106** may vary when the number of the plurality of optical fibers is 4 and each of the plurality of optical fibers has a diameter of 200 microns.

In an embodiment of the present disclosure, the second layer **106** has a first diameter d₃ in a range of 1.9-2.5 millimeters when a number of the plurality of optical fibers is 12 and each of the plurality of optical fibers has a diameter of 250 microns. In another embodiment of the present disclosure, the first diameter d₃ of the second layer **106** may vary when the number of the plurality of optical fibers is 12 and each of the plurality of optical fibers has a diameter of 250 microns. In an embodiment of the present disclosure, the second layer **106** has a first diameter d₃ in a range of 1.75-2.35 millimeters when a number of the plurality of optical fibers is 12 and each of the plurality of optical fibers has a diameter of 200 microns. In another embodiment of the present disclosure, the first diameter d₃ of the second layer **106** may vary when the number of the plurality of optical fibers is 12 and each of the plurality of optical fibers has a diameter of 200 microns.

In an embodiment of the present disclosure, the second layer **106** has a first diameter d₃ in a range of 2.4-3.1 millimeters when a number of the plurality of optical fibers is 24 and each of the plurality of optical fibers has a diameter of 250 microns. In another embodiment of the present disclosure, the first diameter d₃ of the second layer **106** may vary when the number of the plurality of optical fibers is 24 and each of the plurality of optical fibers has a diameter of 250 microns. In an embodiment of the present disclosure, the second layer **106** has a first diameter d₃ in a range of 2.1-2.8 millimeters when a number of the plurality of optical fibers is 24 and each of the plurality of optical fibers has a diameter of 200 microns. In another embodiment of the present disclosure, the first diameter d₃ of the second layer **106** may vary when the number of the plurality of optical fibers is 24 and each of the plurality of optical fibers has a diameter of 200 microns.

The optical fiber cable **100** includes the gel **108.** The gel **108** is filled inside the core of the optical fiber cable **100** and around the plurality of optical fibers **102a-102d.** The gel **108** is a thixotropic gel. The thixotropic gel prevents ingression of water inside the core of the optical fiber cable **100.** In an embodiment of the present disclosure, the optical fiber cable **100** includes the one or more water swellable yarns **110a-110c** positioned inside the core of the optical fiber cable **100.** In another embodiment of the present disclosure, the optical fiber cable **100** includes one or more water swellable type aramid yarns **110a-110c** positioned inside the core of the optical fiber cable **100.** The one or more water swellable yarns **110a-110c** prevent ingression of water in the core of the optical fiber cable **100.** In an embodiment of the present disclosure, the one or more water swellable yarns **110a-110c** replace the gel **120.** In another embodiment of the present disclosure, the gel **108** may be replaced by any other type of water blocking elements.

The optical fiber cable **100** has a diameter in a range of about 1.5 millimeters to about 3 millimeters. In an embodiment of the present disclosure, the optical fiber cable **100** has a diameter in a range of 1.5-2. 1millimeters when the number of the plurality of optical fibers **102a-102d** is 4 and the diameter of the optical fibers is 250 microns. In another embodiment of the present disclosure, the optical fiber cable **100** has a diameter in a range of 1.4-1.9 millimeters when the number of the plurality of optical fibers **102a-102d** is 4 and the diameter of the optical fibers is 200 microns. In an embodiment of the present disclosure, the optical fiber cable **100** has a diameter in a range of 1.9-2.5 millimeters when the number of the plurality of optical fibers **102a-1021** is 12 and the diameter of the optical fibers is 250 microns. In another embodiment of the present disclosure, the optical fiber cable **100** has a diameter in a range of 1.75-2.35 millimeters when the number of the plurality of optical fibers **102a-1021** is 12 and the diameter of the optical fibers is 200 microns. In an embodiment of the present disclosure, the optical fiber cable **100** has a diameter in a range of 2.4-3.1 millimeters when the number of the plurality of optical fibers **102a-102x** is 24 and the diameter of the optical fibers is 250 microns. In another embodiment of the present disclosure, the optical fiber cable **100** has a diameter in a range of 2.1-2.8 millimeters when the number of the plurality of optical fibers **102a-102x** is 24 and the diameter of the optical fibers is 200 microns. In yet another embodiment of the present disclosure, the diameter of the optical fiber cable **100** may vary. Moreover, the optical fiber cable **100** has a weight in a range of 3-6 kilograms per kilometer. The weight of the optical fiber cable **100** is achieved due to different count of optical fibers and dimensions of the optical fiber cable **100.** In an embodiment of the present disclosure, the optical fiber cable **100** has a weight in a range of 3 kilograms per kilometer ± 10 percent.

The optical fiber cable **100** has a crush resistance of about 800 Newton/10 centimeters. The crush resistance is achieved due to a dual layer construction of the optical fiber cable **100** and the material used for the first layer **104** which has a hardness of around 120 Rockwell and the second layer **106** which has a hardness of around 106 Rockwell. In an embodiment of the present disclosure, the optical fiber cable **100** has a tensile strength of about 70 Newton. The optical fiber cable **100** has impact strength of about 3 Nm. The impact strength of 3 Nm is achieved due to the dual layer construction of the optical fiber cable **100** and the material used for the first layer **104** which has a hardness of around 120 Rockwell and the second layer **106** material which has a hardness of around 106 Rockwell. The optical fiber cable **100** complies with IEC standard IEC 60794-1-2. In an embodiment of the present disclosure, the optical fiber cable **100** is orange in color. In another embodiment of the present disclosure, the optical fiber cable **100** may be of any color. Further, the dimensions of the optical fiber cable **100**, the first layer **104** and the second layer **106** enables the optical fiber cable **100** to be blown up to 1.5-2 kilometers. The blowing distance of 1.5-2 kilometers is achieved due to right balance of stiffness, coefficient of friction and cable flexibility.

The optical fiber cable **100** passes the impact test and the crush test due to the value of the thickness of the first layer **104** and the thickness of the second layer **106.** The impact test is used for determining an ability of the optical fiber cable **100** to withstand impact. The crush test determines the ability of an optical-fiber cable to withstand and/or recover from the effects of a compressive force. The optical fiber cable **100** has at most a fill factor of 85 percent. The fill factor of at most 85 percent is achieved due to materials used for the first layer **104** and the second layer **106** and the dimensions of the first layer **104** and the second layer **106.** The fill factor of the optical fiber cable **100** corresponds to a ratio of a cross section area of the optical fiber cable **100** and ratio of a cross section area of the duct. In an embodiment of the present disclosure, the optical fiber cable **100** has a fill factor in a range of about 46 percent to 76 percent when a number of the plurality of optical fibers is 4 and each of the plurality of optical fibers has a diameter of 250 microns.

In an embodiment of the present disclosure, the optical fiber cable **100** has a fill factor in a range of about 51 percent to 69 percent when a number of the plurality of optical fibers is 4 and each of the plurality of optical fibers has a diameter of 200 microns. In an embodiment of the present disclosure, the optical fiber cable **100** has a fill factor in a range of about 61 percent to 85 percent when a number of the plurality of optical fibers is 12 and each of the plurality of optical fibers has a diameter of 250 microns. In an embodiment of the present disclosure, the optical fiber cable **100** has a fill factor in a range of about 52 percent to 76 percent when a number of the plurality of optical fibers is 12 and each of the plurality of optical fibers has a diameter of 200 microns. In an embodiment of the present disclosure, the optical fiber cable **100** has a fill factor in a range of about 57 percent to 80 percent when a number of the plurality of optical fibers is 24 and each of the plurality of optical fibers has a diameter of 250 microns. In an embodiment of the present disclosure, the optical fiber cable **100** has a fill factor in a range of about 54 percent to 82 percent when a number of the plurality of optical fibers is 24 and each of the plurality of optical fibers has a diameter of 200 microns.

In an embodiment of the present disclosure, the ratio of the inner diameter and the outer diameter is in a range of 0.33-0.60 when a number of the plurality of optical fibers is 4 and each of the plurality of optical fibers has a diameter of 250 microns. In an embodiment of the present disclosure, the ratio of the inner diameter and the outer diameter is in a range of 0.32-0.50 when a number of the plurality of optical fibers is 4 and each of the plurality of optical fibers has a diameter of 200 microns. In an embodiment of the present disclosure, the ratio of the inner diameter and the outer diameter is in a range of 0.44-0.68 when a number of the plurality of optical fibers is 12 and each of the plurality of optical fibers has a diameter of 250 microns.

In an embodiment of the present disclosure, the ratio of the inner diameter and the outer diameter is in a range of 0.41-0.66 when a number of the plurality of optical fibers is 12 and each of the plurality of optical fibers has a diameter of 200 microns. In an embodiment of the present disclosure, the ratio of the inner diameter and the outer diameter is in a range of 0.52-0.79 when a number of the plurality of optical fibers is 24 and each of the plurality of optical fibers has a diameter of 250 microns. In an embodiment of the present disclosure, the ratio of the inner diameter and the outer diameter is in a range of 0.46-0.76 when a number of the plurality of optical fibers is 24 and each of the plurality of optical fibers has a diameter of 200 microns. In an embodiment of the present disclosure, the optical fiber cable includes a combination of polycarbonate for the first layer **104** and polyamide for the second layer **106.** In an embodiment of the present disclosure, the optical fiber cable may utilize other combination of materials as well for the first layer **104** and the second layer **106.**

In an embodiment of the present disclosure, the optical fiber cable **100** includes the plurality of optical fibers. The plurality of optical fibers lies substantially along the longitudinal axis of the optical fiber cable **100.** In addition, the optical fiber cable **100** includes the first layer **104.** The first layer **104** surrounds the plurality of optical fibers. Moreover, the optical fiber cable **100** includes the second layer **106.** The second layer **106** surrounds the first layer **104.** The first layer **104** is made of the thermoplastic material. Further, the first layer **104** has the thickness in a range of 0.2 - 0.3 millimeter. The second layer **106** is made of a polymeric material. The second layer **106** has the thickness in a range of 0.2-0.3 millimeter. The optical fiber cable **100** has the diameter in a range of about 1.5 millimeters to about 3 millimeters. In addition, the optical fiber cable **100** can be blown for about 1.5-2 kilometers. The optical fiber cable **100** has the weight in the range of 3-6 kg/km. The optical fiber cable **100** has at most a fill factor of 85 percent. The optical fiber cable **100** has a crush resistance of about 800 Newton/10 centimeters and passes the impact test. The optical fiber cable **100** has the impact strength of 3 Nm. In an embodiment of the present disclosure, the first layer **104** has the first diameter d₁ in a range of 0.7-0.9 millimeter when a number of the plurality of optical fibers is 4 and each of the plurality of optical fibers has a diameter of 250 microns. In an embodiment of the present disclosure, the first layer **104** has the second diameter d₂ in a range of 1.1-1.5 millimeter when a number of the plurality of optical fibers is 4 and each of the plurality of optical fibers has a diameter of 250 microns. In an embodiment of the present disclosure, the first layer **104** has the first diameter d₁ in a range of 0.6-0.7 millimeter when a number of the plurality of optical fibers is 4 and each of the plurality of optical fibers has a diameter of 200 microns. In an embodiment of the present disclosure, the first layer **104** has the second diameter d₂ in a range of 1.0-1.3 millimeter when a number of the plurality of optical fibers is 4 and each of the plurality of optical fibers has a diameter of 200 microns. In an embodiment of the present disclosure, the first layer **104** has a first diameter d₁ in a range of 1.1-1.3 millimeter when a number of the plurality of optical fibers is 12 and each of the plurality of optical fibers has a diameter of 250 microns. In an embodiment of the present disclosure, the first layer **104** has the second diameter d₂ in a range of 1.5-1.9 millimeter when a number of the plurality of optical fibers is 12 and each of the plurality of optical fibers has a diameter of 250 microns. In an embodiment of the present disclosure, the first layer **104** has the first diameter d₁ in a range of 0.95-1.15 millimeter when a number of the plurality of optical fibers is 12 and each of the plurality of optical fibers has a diameter of 200 microns. In an embodiment of the present disclosure, the first layer **104** has the second diameter d₂ in a range of 1.35-1.75 millimeter when a number of the plurality of optical fibers is 12 and each of the plurality of optical fibers has a diameter of 200 microns. In an embodiment of the present disclosure, the first layer **104** has the first diameter d₁ in a range of 1.6-1.9 millimeter when a number of the plurality of optical fibers is 24 and each of the plurality of optical fibers has a diameter of 250 microns. In an embodiment of the present disclosure, the first layer **104** has the second diameter d₂ in a range of 2-2.5 millimeters when a number of the plurality of optical fibers is 24 and each of the plurality of optical fibers has a diameter of 250 microns. In an embodiment of the present disclosure, the first layer **104** has the first diameter d₁ in a range of 1.3-1.6 millimeter when a number of the plurality of optical fibers is 24 and each of the plurality of optical fibers has a diameter of 200 microns. In an embodiment of the present disclosure, the first layer **104** has the second diameter d₂ in a range of 1.7-2.2 millimeters when a number of the plurality of optical fibers is 24 and each of the plurality of optical fibers has a diameter of 200 microns.

In another embodiment of the present disclosure, the optical fiber cable **100** includes the plurality of optical fibers. The plurality of optical fibers lies substantially along the longitudinal axis of the optical fiber cable **100.** In addition, the optical fiber cable **100** includes the first layer **104.** The first layer **104** surrounds the plurality of optical fibers. Moreover, the optical fiber cable **100** includes the second layer **106.** The second layer **106** surrounds the first layer **104.** The first layer **104** is made of the thermoplastic material. Further, the first layer **104** has the thickness in a range of 0.2 - 0.3 millimeter. The second layer **106** is made of a polymeric material. The second layer **106** has the thickness in a range of 0.2-0.3 millimeter. The optical fiber cable **100** has the diameter in a range of about 1.5 millimeters to about 3 millimeters. In addition, the optical fiber cable **100** can be blown for about 1.5-2 kilometers. The optical fiber cable **100** has the weight in the range of 3-6 kg/km. The optical fiber cable **100** has at most a fill factor of 85 percent. The optical fiber cable **100** has a crush resistance of about 800 Newton/10 centimeters and passes the impact test. The optical fiber cable **100** has the impact strength of 3 Nm. In an embodiment of the present disclosure, the second layer **106** has the first diameter d₃ in a range of 1.5-2.1 millimeters when a number of the plurality of optical fibers is 4 and each of the plurality of optical fibers has a diameter of 250 microns. In an embodiment of the present disclosure, the second layer **106** has the first diameter d₃ in a range of 1.4-1.9 millimeter when a number of the plurality of optical fibers is 4 and each of the plurality of optical fibers has a diameter of 200 microns. In an embodiment of the present disclosure, the second layer **106** has the first diameter d₃ in a range of 1.9-2.5 millimeters when a number of the plurality of optical fibers is 12 and each of the plurality of optical fibers has a diameter of 250 microns. In an embodiment of the present disclosure, the second layer **106** has the first diameter d₃ in a range of 1.75-2.35 millimeters when a number of the plurality of optical fibers is 12 and each of the plurality of optical fibers has a diameter of 200 microns. In an embodiment of the present disclosure, the second layer **106** has the first diameter d₃ in a range of 2.4-3.1 millimeters when a number of the plurality of optical fibers is 24 and each of the plurality of optical fibers has a diameter of 250 microns. In an embodiment of the present disclosure, the second layer **106** has the first diameter d₃ in a range of 2.1-2.8 millimeters when a number of the plurality of optical fibers is 24 and each of the plurality of optical fibers has a diameter of 200 microns.

In yet another embodiment of the present disclosure, the optical fiber cable **100** includes the plurality of optical fibers. The plurality of optical fibers lies substantially along the longitudinal axis of the optical fiber cable **100.** In addition, the optical fiber cable **100** includes the first layer **104.** The first layer **104** surrounds the plurality of optical fibers. Moreover, the optical fiber cable **100** includes the second layer **106.** The second layer **106** surrounds the first layer **104.** The first layer **104** is made of the thermoplastic material. Further, the first layer **104** has the thickness in a range of 0.2 - 0.3 millimeter. The second layer **106** is made of a polymeric material. The second layer **106** has the thickness in a range of 0.2-0.3 millimeter. The optical fiber cable **100** has the diameter in a range of about 1.5 millimeters to about 3 millimeters. In addition, the optical fiber cable **100** can be blown for about 1.5-2 kilometers. The optical fiber cable **100** has the weight in the range of 3-6 kg/km. The optical fiber cable **100** has atmost fill factor of 85 percent. The optical fiber cable **100** has a crush resistance of about 800 Newton/10 centimeters and passes the impact test. The optical fiber cable **100** has the impact strength of 3 Nm. In an embodiment of the present disclosure, the first layer **104** has the first diameter d₁ in a range of 0.7-0.9 millimeter when a number of the plurality of optical fibers is 4 and each of the plurality of optical fibers has a diameter of 250 microns. In an embodiment of the present disclosure, the first layer **104** has the second diameter d₂ in a range of 1.1-1.5 millimeter when a number of the plurality of optical fibers is 4 and each of the plurality of optical fibers has a diameter of 250 microns. In an embodiment of the present disclosure, the first layer **104** has the first diameter d₁ in a range of 0.6-0.7 millimeter when a number of the plurality of optical fibers is 4 and each of the plurality of optical fibers has a diameter of 200 microns. In an embodiment of the present disclosure, the first layer **104** has the second diameter d₂ in a range of 1.0-1.3 millimeter when a number of the plurality of optical fibers is 4 and each of the plurality of optical fibers has a diameter of 200 microns. In an embodiment of the present disclosure, the first layer **104** has a first diameter d₁ in a range of 1.1-1.3 millimeter when a number of the plurality of optical fibers is 12 and each of the plurality of optical fibers has a diameter of 250 microns. In an embodiment of the present disclosure, the first layer **104** has the second diameter d₂ in a range of 1.5-1.9 millimeter when a number of the plurality of optical fibers is 12 and each of the plurality of optical fibers has a diameter of 250 microns. In an embodiment of the present disclosure, the first layer **104** has the first diameter d₁ in a range of 0.95-1.15 millimeter when a number of the plurality of optical fibers is 12 and each of the plurality of optical fibers has a diameter of 200 microns. In an embodiment of the present disclosure, the first layer **104** has the second diameter d₂ in a range of 1.35-1.75 millimeter when a number of the plurality of optical fibers is 12 and each of the plurality of optical fibers has a diameter of 200 microns. In an embodiment of the present disclosure, the first layer **104** has the first diameter d₁ in a range of 1.6-1.9 millimeter when a number of the plurality of optical fibers is 24 and each of the plurality of optical fibers has a diameter of 250 microns. In an embodiment of the present disclosure, the first layer **104** has the second diameter d₂ in a range of 2-2.5 millimeters when a number of the plurality of optical fibers is 24 and each of the plurality of optical fibers has a diameter of 250 microns. In an embodiment of the present disclosure, the first layer **104** has the first diameter d₁ in a range of 1.3-1.6 millimeter when a number of the plurality of optical fibers is 24 and each of the plurality of optical fibers has a diameter of 200 microns. In an embodiment of the present disclosure, the first layer **104** has the second diameter d₂ in a range of 1.7-2.2 millimeters when a number of the plurality of optical fibers is 24 and each of the plurality of optical fibers has a diameter of 200 microns. In an embodiment of the present disclosure, the second layer **106** has the first diameter d₃ in a range of 1.5-2.1 millimeters when a number of the plurality of optical fibers is 4 and each of the plurality of optical fibers has a diameter of 250 microns. In an embodiment of the present disclosure, the second layer **106** has the first diameter d₃ in a range of 1.4-1.9 millimeter when a number of the plurality of optical fibers is 4 and each of the plurality of optical fibers has a diameter of 200 microns. In an embodiment of the present disclosure, the second layer **106** has the first diameter d₃ in a range of 1.9-2.5 millimeters when a number of the plurality of optical fibers is 12 and each of the plurality of optical fibers has a diameter of 250 microns. In an embodiment of the present disclosure, the second layer **106** has the first diameter d₃ in a range of 1.75-2.35 millimeters when a number of the plurality of optical fibers is 12 and each of the plurality of optical fibers has a diameter of 200 microns. In an embodiment of the present disclosure, the second layer **106** has the first diameter d₃ in a range of 2.4-3.1 millimeters when a number of the plurality of optical fibers is 24 and each of the plurality of optical fibers has a diameter of 250 microns. In an embodiment of the present disclosure, the second layer **106** has the first diameter d₃ in a range of 2.1-2.8 millimeters when a number of the plurality of optical fibers is 24 and each of the plurality of optical fibers has a diameter of 200 microns.

In yet another embodiment of the present disclosure, the optical fiber cable **100** includes the plurality of optical fibers. The plurality of optical fibers lies substantially along the longitudinal axis of the optical fiber cable **100.** In addition, the optical fiber cable **100** includes the first layer **104.** The first layer **104** surrounds the plurality of optical fibers. Moreover, the optical fiber cable **100** includes the second layer **106.** The second layer **106** surrounds the first layer **104.** The first layer **104** is made of the thermoplastic material. Further, the first layer **104** has the thickness in a range of 0.2 - 0.3 millimeter. The second layer **106** is made of a polymeric material. The second layer **106** has the thickness in a range of 0.2-0.3 millimeter. The optical fiber cable **100** has the diameter in a range of about 1.5 millimeters to about 3 millimeters. In addition, the optical fiber cable **100** can be blown for about 1.5-2 kilometers. The optical fiber cable **100** has the weight in the range of 3-6 kg/km. The optical fiber cable **100** has at most a fill factor of 85 percent. The optical fiber cable **100** has a crush resistance of about 800 Newton/10 centimeters and passes the impact test. The optical fiber cable **100** has the impact strength of 3 Nm. In an embodiment of the present disclosure, each of the plurality of optical fibers has a diameter of about at least one of 200 microns and 250 microns.

In yet another embodiment of the present disclosure, the optical fiber cable **100** includes the plurality of optical fibers. The plurality of optical fibers lies substantially along the longitudinal axis of the optical fiber cable **100.** In addition, the optical fiber cable **100** includes the first layer **104.** The first layer **104** surrounds the plurality of optical fibers. Moreover, the optical fiber cable **100** includes the second layer **106.** The second layer **106** surrounds the first layer **104.** The first layer **104** is made of the thermoplastic material. Further, the first layer **104** has the thickness in a range of 0.2 - 0.3 millimeter. The second layer **106** is made of a polymeric material. The second layer **106** has the thickness in a range of 0.2-0.3 millimeter. The optical fiber cable **100** has the diameter in a range of about 1.5 millimeters to about 3 millimeters. In addition, the optical fiber cable **100** can be blown for about 1.5-2 kilometers. The optical fiber cable **100** has the weight in the range of 3-6 kg/km. The optical fiber cable **100** has at most a fill factor of 85 percent. The optical fiber cable **100** has a crush resistance of about 800 Newton/10 centimeters and passes the impact test. The optical fiber cable **100** has the impact strength of 3 Nm. In an embodiment of the present disclosure, each of the plurality of optical fibers has a diameter of about at least one of 200 microns and 250 microns. In an embodiment of the present disclosure, the first layer **104** has the first diameter d₁ in a range of 0.7-0.9 millimeter when a number of the plurality of optical fibers is 4 and each of the plurality of optical fibers has a diameter of 250 microns. In an embodiment of the present disclosure, the first layer **104** has the second diameter d₂ in a range of 1.1-1.5 millimeter when a number of the plurality of optical fibers is 4 and each of the plurality of optical fibers has a diameter of 250 microns. In an embodiment of the present disclosure, the first layer **104** has the first diameter d₁ in a range of 0.6-0.7 millimeter when a number of the plurality of optical fibers is 4 and each of the plurality of optical fibers has a diameter of 200 microns. In an embodiment of the present disclosure, the first layer **104** has the second diameter d₂ in a range of 1.0-1.3 millimeter when a number of the plurality of optical fibers is 4 and each of the plurality of optical fibers has a diameter of 200 microns. In an embodiment of the present disclosure, the first layer **104** has a first diameter d₁ in a range of 1.1-1.3 millimeter when a number of the plurality of optical fibers is 12 and each of the plurality of optical fibers has a diameter of 250 microns. In an embodiment of the present disclosure, the first layer **104** has the second diameter d₂ in a range of 1.5-1.9 millimeter when a number of the plurality of optical fibers is 12 and each of the plurality of optical fibers has a diameter of 250 microns. In an embodiment of the present disclosure, the first layer **104** has the first diameter d₁ in a range of 0.95-1.15 millimeter when a number of the plurality of optical fibers is 12 and each of the plurality of optical fibers has a diameter of 200 microns. In an embodiment of the present disclosure, the first layer **104** has the second diameter d₂ in a range of 1.35-1.75 millimeter when a number of the plurality of optical fibers is 12 and each of the plurality of optical fibers has a diameter of 200 microns. In an embodiment of the present disclosure, the first layer **104** has the first diameter d₁ in a range of 1.6-1.9 millimeter when a number of the plurality of optical fibers is 24 and each of the plurality of optical fibers has a diameter of 250 microns. In an embodiment of the present disclosure, the first layer **104** has the second diameter d₂ in a range of 2-2.5 millimeters when a number of the plurality of optical fibers is 24 and each of the plurality of optical fibers has a diameter of 250 microns. In an embodiment of the present disclosure, the first layer **104** has the first diameter d₁ in a range of 1.3-1.6 millimeter when a number of the plurality of optical fibers is 24 and each of the plurality of optical fibers has a diameter of 200 microns. In an embodiment of the present disclosure, the first layer **104** has the second diameter d₂ in a range of 1.7-2.2 millimeters when a number of the plurality of optical fibers is 24 and each of the plurality of optical fibers has a diameter of 200 microns.

In yet another embodiment of the present disclosure, the optical fiber cable **100** includes the plurality of optical fibers. The plurality of optical fibers lies substantially along the longitudinal axis of the optical fiber cable **100.** In addition, the optical fiber cable **100** includes the first layer **104.** The first layer **104** surrounds the plurality of optical fibers. Moreover, the optical fiber cable **100** includes the second layer **106.** The second layer **106** surrounds the first layer **104.** The first layer **104** is made of the thermoplastic material. Further, the first layer **104** has the thickness in a range of 0.2 - 0.3 millimeter. The second layer **106** is made of a polymeric material. The second layer **106** has the thickness in a range of 0.2-0.3 millimeter. The optical fiber cable **100** has the diameter in a range of about 1.5 millimeters to about 3 millimeters. In addition, the optical fiber cable **100** can be blown for about 1.5-2 kilometers. The optical fiber cable **100** has the weight in the range of 3-6 kg/km. The optical fiber cable **100** has at most a fill factor of 85 percent. The optical fiber cable **100** has a crush resistance of about 800 Newton/10 centimeters and passes the impact test. The optical fiber cable **100** has the impact strength of 3 Nm. In an embodiment of the present disclosure, each of the plurality of optical fibers has a diameter of about at least one of 200 microns and 250 microns. In an embodiment of the present disclosure, the second layer **106** has the first diameter d₃ in a range of 1.5-2.1 millimeters when a number of the plurality of optical fibers is 4 and each of the plurality of optical fibers has a diameter of 250 microns. In an embodiment of the present disclosure, the second layer **106** has the first diameter d₃ in a range of 1.4-1.9 millimeter when a number of the plurality of optical fibers is 4 and each of the plurality of optical fibers has a diameter of 200 microns. In an embodiment of the present disclosure, the second layer **106** has the first diameter d₃ in a range of 1.9-2.5 millimeters when a number of the plurality of optical fibers is 12 and each of the plurality of optical fibers has a diameter of 250 microns. In an embodiment of the present disclosure, the second layer **106** has the first diameter d₃ in a range of 1.75-2.35 millimeters when a number of the plurality of optical fibers is 12 and each of the plurality of optical fibers has a diameter of 200 microns. In an embodiment of the present disclosure, the second layer **106** has the first diameter d₃ in a range of 2.4-3.1 millimeters when a number of the plurality of optical fibers is 24 and each of the plurality of optical fibers has a diameter of 250 microns. In an embodiment of the present disclosure, the second layer **106** has the first diameter d₃ in a range of 2.1-2.8 millimeters when a number of the plurality of optical fibers is 24 and each of the plurality of optical fibers has a diameter of 200 microns.

In yet another embodiment of the present disclosure, the optical fiber cable **100** includes the plurality of optical fibers. The plurality of optical fibers lies substantially along the longitudinal axis of the optical fiber cable **100.** In addition, the optical fiber cable **100** includes the first layer **104.** The first layer **104** surrounds the plurality of optical fibers. Moreover, the optical fiber cable **100** includes the second layer **106.** The second layer **106** surrounds the first layer **104.** The first layer **104** is made of the thermoplastic material. Further, the first layer **104** has the thickness in a range of 0.2 - 0.3 millimeter. The second layer **106** is made of a polymeric material. The second layer **106** has the thickness in a range of 0.2-0.3 millimeter. The optical fiber cable **100** has the diameter in a range of about 1.5 millimeters to about 3 millimeters. In addition, the optical fiber cable **100** can be blown for about 1.5-2 kilometers. The optical fiber cable **100** has the weight in the range of 3-6 kg/km. The optical fiber cable **100** has at most a fill factor of 85 percent. The optical fiber cable **100** has a crush resistance of about 800 Newton/10 centimeters and passes the impact test. The optical fiber cable **100** has the impact strength of 3 Nm. In an embodiment of the present disclosure, each of the plurality of optical fibers has a diameter of about at least one of 200 microns and 250 microns. In an embodiment of the present disclosure, the first layer **104** has the first diameter d₁ in a range of 0.7-0.9 millimeter when a number of the plurality of optical fibers is 4 and each of the plurality of optical fibers has a diameter of 250 microns. In an embodiment of the present disclosure, the first layer **104** has the second diameter d₂ in a range of 1.1-1.5 millimeter when a number of the plurality of optical fibers is 4 and each of the plurality of optical fibers has a diameter of 250 microns. In an embodiment of the present disclosure, the first layer **104** has the first diameter d₁ in a range of 0.6-0.7 millimeter when a number of the plurality of optical fibers is 4 and each of the plurality of optical fibers has a diameter of 200 microns. In an embodiment of the present disclosure, the first layer **104** has the second diameter d₂ in a range of 1.0-1.3 millimeter when a number of the plurality of optical fibers is 4 and each of the plurality of optical fibers has a diameter of 200 microns. In an embodiment of the present disclosure, the first layer **104** has a first diameter d₁ in a range of 1.1-1.3 millimeter when a number of the plurality of optical fibers is 12 and each of the plurality of optical fibers has a diameter of 250 microns. In an embodiment of the present disclosure, the first layer **104** has the second diameter d₂ in a range of 1.5-1.9 millimeter when a number of the plurality of optical fibers is 12 and each of the plurality of optical fibers has a diameter of 250 microns. In an embodiment of the present disclosure, the first layer **104** has the first diameter d₁ in a range of 0.95-1.15 millimeter when a number of the plurality of optical fibers is 12 and each of the plurality of optical fibers has a diameter of 200 microns. In an embodiment of the present disclosure, the first layer **104** has the second diameter d₂ in a range of 1.35-1.75 millimeter when a number of the plurality of optical fibers is 12 and each of the plurality of optical fibers has a diameter of 200 microns. In an embodiment of the present disclosure, the first layer **104** has the first diameter d₁ in a range of 1.6-1.9 millimeter when a number of the plurality of optical fibers is 24 and each of the plurality of optical fibers has a diameter of 250 microns. In an embodiment of the present disclosure, the first layer **104** has the second diameter d₂ in a range of 2-2.5 millimeters when a number of the plurality of optical fibers is 24 and each of the plurality of optical fibers has a diameter of 250 microns. In an embodiment of the present disclosure, the first layer **104** has the first diameter d₁ in a range of 1.3-1.6 millimeter when a number of the plurality of optical fibers is 24 and each of the plurality of optical fibers has a diameter of 200 microns. In an embodiment of the present disclosure, the first layer **104** has the second diameter d₂ in a range of 1.7-2.2 millimeters when a number of the plurality of optical fibers is 24 and each of the plurality of optical fibers has a diameter of 200 microns. In an embodiment of the present disclosure, the second layer **106** has the first diameter d₃ in a range of 1.5-2.1 millimeters when a number of the plurality of optical fibers is 4 and each of the plurality of optical fibers has a diameter of 250 microns. In an embodiment of the present disclosure, the second layer **106** has the first diameter d₃ in a range of 1.4-1.9 millimeter when a number of the plurality of optical fibers is 4 and each of the plurality of optical fibers has a diameter of 200 microns. In an embodiment of the present disclosure, the second layer **106** has the first diameter d₃ in a range of 1.9-2.5 millimeters when a number of the plurality of optical fibers is 12 and each of the plurality of optical fibers has a diameter of 250 microns. In an embodiment of the present disclosure, the second layer **106** has the first diameter d₃ in a range of 1.75-2.35 millimeters when a number of the plurality of optical fibers is 12 and each of the plurality of optical fibers has a diameter of 200 microns. In an embodiment of the present disclosure, the second layer **106** has the first diameter d₃ in a range of 2.4-3.1 millimeters when a number of the plurality of optical fibers is 24 and each of the plurality of optical fibers has a diameter of 250 microns. In an embodiment of the present disclosure, the second layer **106** has the first diameter d₃ in a range of 2.1-2.8 millimeters when a number of the plurality of optical fibers is 24 and each of the plurality of optical fibers has a diameter of 200 microns.

Modifications to embodiments of the present disclosure described in the foregoing are possible without departing from the scope of the present disclosure as defined by the accompanying claims. Expressions such as "including", "comprising", "incorporating", "have", "is" used to describe the present disclosure are intended to be construed in a non-exclusive manner, namely allowing for items, components or elements not explicitly described also to be present. Reference to the singular is also to be construed to relate to the plural.

## Claims

1. An optical fiber cable (100) comprising:
a plurality of optical fibers (102a-102d; 102a-1021; 102a-102x) lying substantially along a longitudinal axis of the optical fiber cable (100);
a first layer (104) surrounding the plurality of optical fibers (102a-102d; 102a-1021; 102a-102x); and
a second layer (106) having a hardness of 106 Rockwell surrounding the first layer (104),
wherein the first layer (104) is made of a thermoplastic material, the first layer (104) has a thickness in a range of 0.2 - 0.3 millimeter, the second layer (106) is made of a polymer material, wherein the second layer (106) has a thickness in a range of 0.2-0.3 millimeter, the optical fiber cable (100) has a diameter in a range of 1.5 millimeters to 3 millimeters, the optical fiber cable (100) can be blown for 1.5-2 kilometers, passes the impact test and has at most a fill factor of 85 percent,
**characterized in that** the first layer (104) has a hardness of 120 Rockwell and **in that** the optical fiber cable (100) has a weight in a range of 3-6 kg/km, a crush resistance of 800 Newton/10 centimeters and impact strength of 3 Nm.

2. The optical fiber cable (100) according to claim 1, wherein the first layer (104) has a first diameter d₁ in a range of 0.7-0.9 millimeter and a second diameter d₂ in a range of 1.1-1.5 millimeter when a number of the plurality of optical fibers (102a-102d; 102a-1021; 102a-102x) is 4 and each of the plurality of optical fibers (102a-102d; 102a-1021; 102a-102x) has a diameter of 250 microns, wherein the first layer (104) has a first diameter d₁ in a range of 0.6-0.7 millimeter and a second diameter d₂ in a range of 1.0-1.3 millimeter when a number of the plurality of optical fibers (102a-102d; 102a-1021; 102a-102x) is 4 and each of the plurality of optical fibers (102a-102d; 102a-1021; 102a-102x) has a diameter of 200 microns, wherein the first layer (104) has a first diameter d₁ in a range of 1.1-1.3 millimeter and a second diameter d₂ in a range of 1.5-1.9 millimeter when a number of the plurality of optical fibers (102a-102d; 102a-1021; 102a-102x) is 12 and each of the plurality of optical fibers (102a-102d; 102a-1021; 102a-102x)has a diameter of 250 microns, wherein the first layer (104) has a first diameter d₁ in a range of 0.95-1.15 millimeter and a second diameter d₂ in a range of 1.35-1.75 millimeter when a number of the plurality of optical fibers (102a-102d; 102a-1021; 102a-102x) is 12 and each of the plurality of optical fibers (102a-102d; 102a-1021; 102a-102x) has a diameter of 200 microns, wherein the first layer (104) has a first diameter d₁ in a range of 1.6-1.9 millimeter and a second diameter d₂ in a range of 2-2.5 millimeters when a number of the plurality of optical fibers (102a-102d; 102a-1021; 102a-102x) is 24 and each of the plurality of optical fibers (102a-102d; 102a-1021; 102a-102x) has a diameter of 250 microns and wherein the first layer (104) has a first diameter d₁ in a range of 1.3-1.6 millimeter and a second diameter d₂ in a range of 1.7-2.2 millimeters when a number of the plurality of optical fibers (102a-102d; 102a-1021; 102a-102x) is 24 and each of the plurality of optical fibers (102a-102d; 102a-1021; 102a-102x) has a diameter of 200 microns.

3. The optical fiber cable (100) according to claim 1, wherein the second layer (106) has a first diameter d₃ in a range of 1.5-2.1 millimeters when a number of the plurality of optical fibers (102a-102d; 102a-1021; 102a-102x) is 4 and each of the plurality of optical fibers (102a-102d; 102a-1021; 102a-102x) has a diameter of 250 microns, wherein the second layer (106) has a first diameter d₃ in a range of 1.4-1.9 millimeter when a number of the plurality of optical fibers (102a-102d; 102a-1021; 102a-102x) is 4 and each of the plurality of optical fibers (102a-102d; 102a-1021; 102a-102x) has a diameter of 200 microns, wherein the second layer (106) has a first diameter d₃ in a range of 1.9-2.5 millimeters when a number of the plurality of optical fibers (102a-102d; 102a-1021; 102a-102x) is 12 and each of the plurality of optical fibers (102a-102d; 102a-1021; 102a-102x) has a diameter of 250 microns, wherein the second layer (106) has a first diameter d₃ in a range of 1.75-2.35 millimeters when a number of the plurality of optical fibers (102a-102d; 102a-1021; 102a-102x) is 12 and each of the plurality of optical fibers (102a-102d; 102a-1021; 102a-102x) has a diameter of 200 microns, wherein the second layer (106) has a first diameter d₃ in a range of 2.4-3.1 millimeters when a number of the plurality of optical fibers (102a-102d; 102a-1021; 102a-102x) is 24 and each of the plurality of optical fibers (102a-102d; 102a-1021; 102a-102x) has a diameter of 250 microns and wherein the second layer (106) has a first diameter d₃ in a range of 2.1-2.8 millimeters when a number of the plurality of optical fibers (102a-102d; 102a-1021; 102a-102x) is 24 and each of the plurality of optical fibers (102a-102d; 102a-1021; 102a-102x) has a diameter of 200 microns.

4. The optical fiber cable (100) according to claim 1, further comprising a gel (108) filled inside the optical fiber cable (100) and around the plurality of optical fibers (102a-102d; 102a-1021; 102a-102x), wherein the gel (108) is a thixotropic gel and wherein the thixotropic gel prevents ingression of water inside the core of the optical fiber cable (100).

5. The optical fiber cable (100) according to claim 1, further comprising one or more water swellable yarns (110a-1 10c) positioned inside the core of the optical fiber cable (100).

6. The optical fiber cable (100) according to claim 1, wherein each of the plurality of optical fibers (102a-102d; 102a-1021; 102a-102x) has a diameter of at least one of 200 microns and 250 microns.

7. The optical fiber cable (100) according to claim 1 further comprising a coating over the plurality of optical fibers (102a-102d; 102a-1021; 102a-102x), wherein the coating is made of a material selected from a group consisting of low smoke zero halogen, polyvinyl chloride, polyamide 12, thermoplastic urethane and thermoplastic elastomer.

8. The optical fiber cable (100) according to claim 1, wherein the optical fiber cable (100) has a tensile strength of 70 Newton.

9. The optical fiber cable (100) according to claim 1, wherein the thermoplastic material is polycarbonate.

10. The optical fiber cable (100) according to claim 1, wherein the polymer material is polyamide-12.

## Patentansprüche

1. Optisches Faserkabel (100) umfassend:
eine Vielzahl von optischen Fasern (102a-102d; 102a-1021; 102a-102x), die im Wesentlichen entlang einer Längsachse des optischen Faserkabels (100) liegen;
eine erste Schicht (104), die die Vielzahl von optischen Fasern (102a-102d; 102a-1021; 102a-102x) umgibt; und
eine zweite Schicht (106) mit einer Härte von 106 Rockwell, die die erste Schicht (104) umgibt;
worin die erste Schicht (104) aus einem thermoplastischen Material besteht, die erste Schicht (104) eine Dicke in einem Bereich von 0,2 - 0,3 Millimetern aufweist, die zweite Schicht (106) aus einem Polymermaterial besteht, worin die zweite Schicht (106) eine Dicke in einem Bereich von 0,2 - 0,3 Millimetern aufweist, das optische Faserkabel (100) einen Durchmesser in einem Bereich von 1,5 Millimetern bis 3 Millimetern hat, das optische Faserkabel (100) für 1,5 - 2 Kilometern geblasen werden kann, den Schlagversuch besteht und höchstens einen Füllfaktor von 85 Prozent hat, **dadurch gekennzeichnet, dass** die erste Schicht (104) eine Härte von 120 Rockwell aufweist und dass das optische Faserkabel (100) ein Gewicht in einem Bereich von 3 - 6 kg/km, einen Stauchwiderstand von 800 Newton/10 Zentimetern und eine Stoßfestigkeit von 3 Nm hat.

2. Optisches Faserkabel (100) nach Anspruch 1, worin die erste Schicht (104) einen ersten Durchmesser d₁ in einem Bereich von 0,7 - 0,9 Millimetern und einen zweiten Durchmesser d₂ in einem Bereich von 1,1 - 1,5 Millimetern hat, wenn eine Anzahl der Vielzahl von optischen Fasern (102a-102d; 102a-1021; 102a-102x) 4 ist und jede der Vielzahl von optischen Fasern (102a-102d; 102a-1021; 102a-102x) einen Durchmesser von 250 Mikron hat, worin die erste Schicht (104) einen ersten Durchmesser d₁ in einem Bereich von 0,6 - 0,7 Millimetern und einen zweiten Durchmesser d₂ in einem Bereich von 1,0 - 1,3 Millimetern hat, wenn eine Anzahl der Vielzahl von optischen Fasern (102a-102d; 102a-1021; 102a-102x) 4 ist und jede der Vielzahl von optischen Fasern (102a-102d; 102a-1021; 102a-102x) einen Durchmesser von 200 Mikron hat, worin die erste Schicht (104) einen ersten Durchmesser d₁ in einem Bereich von 1,1 - 1,3 Millimetern und einen zweiten Durchmesser d₂ in einem Bereich von 1,5 - 1,9 Millimetern hat, wenn eine Anzahl der Vielzahl von optischen Fasern (102a-102d; 102a-1021; 102a-102x) 12 ist und jede der Vielzahl von optischen Fasern (102a-102d; 102a-1021; 102a-102x) einen Durchmesser von 250 Mikron hat, worin die erste Schicht (104) einen ersten Durchmesser d₁ in einem Bereich von 0,95 - 1,15 Millimetern und einen zweiten Durchmesser d₂ in einem Bereich von 1,35 - 1,75 Millimetern hat, wenn eine Anzahl der Vielzahl von optischen Fasern (102a-102d; 102a-1021; 102a-102x) 12 ist und jede der Vielzahl von optischen Fasern (102a-102d; 102a-1021; 102a-102x) einen Durchmesser von 200 Mikron hat, worin die erste Schicht (104) einen ersten Durchmesser d₁ in einem Bereich von 1,6 - 1,9 Millimetern und einen zweiten Durchmesser d₂ in einem Bereich von 2 - 2,5 Millimetern hat, wenn eine Anzahl der Vielzahl von optischen Fasern (102a-102d; 102a-1021; 102a-102x) 24 ist und jede der Vielzahl von optischen Fasern (102a-102d; 102a-1021; 102a-102x) einen Durchmesser von 250 Mikron hat und worin die erste Schicht (104) einen ersten Durchmesser d₁ in einem Bereich von 1,3 - 1,6 Millimetern und einen zweiten Durchmesser d₂ in einem Bereich von 1,7 - 2,2 Millimetern hat, wenn eine Anzahl der Vielzahl von optischen Fasern (102a-102d; 102a-1021; 102a-102x) 24 ist und jede der Vielzahl von optischen Fasern (102a-102d; 102a-1021; 102a-102x) einen Durchmesser von 200 Mikron hat.

3. Optisches Faserkabel (100) nach Anspruch 1, worin die zweite Schicht (106) einen ersten Durchmesser d₃ in einem Bereich von 1,5 - 2,1 Millimetern hat, wenn eine Anzahl der Vielzahl von optischen Fasern (102a-102d; 102a-1021; 102a-102x) 4 ist und jede der Vielzahl von optischen Fasern (102a-102d; 102a-102l; 102a-102x) einen Durchmesser von 250 Mikron hat, worin die zweite Schicht (106) einen ersten Durchmesser d₃ in einem Bereich von 1,4 - 1,9 Millimetern hat, wenn eine Anzahl der Vielzahl von optischen Fasern (102a-102d; 102a-1021; 102a-102x) 4 ist und jede der Vielzahl von optischen Fasern (102a-102d; 102a-1021; 102a-102x) einen Durchmesser von 200 Mikron hat, worin die zweite Schicht (106) einen ersten Durchmesser d₃ in einem Bereich von 1,9 - 2,5 Millimetern hat, wenn eine Anzahl der Vielzahl von optischen Fasern (102a-102d; 102a-1021; 102a-102x) 12 ist und jede der Vielzahl von optischen Fasern (102a-102d; 102a-1021; 102a-102x) einen Durchmesser von 250 Mikron hat, worin die zweite Schicht (106) einen ersten Durchmesser d₃ in einem Bereich von 1,75 - 2,35 Millimetern hat, wenn eine Anzahl der Vielzahl von optischen Fasern (102a-102d; 102a-1021; 102a-102x) 12 ist und jede der Vielzahl von optischen Fasern (102a-102d; 102a-1021; 102a-102x) einen Durchmesser von 200 Mikron hat, worin die zweite Schicht (106) einen ersten Durchmesser d₃ in einem Bereich von 2,4 - 3,1 Millimetern hat, wenn eine Anzahl der Vielzahl von optischen Fasern (102a-102d; 102a-1021; 102a-102x) 24 ist und jede der Vielzahl von optischen Fasern (102a-102d; 102a-1021; 102a-102x) einen Durchmesser von 250 Mikron hat und worin die zweite Schicht (106) einen ersten Durchmesser d₃ in einem Bereich von 2,1 - 2,8 Millimetern hat, wenn eine Anzahl der Vielzahl von optischen Fasern (102a-102d; 102a-1021; 102a-102x) 24 ist und jede der Vielzahl von optischen Fasern (102a-102d; 102a-1021; 102a-102x) einen Durchmesser von 200 Mikron hat.

4. Optisches Faserkabel (100) nach Anspruch 1, ferner umfassend ein Gel (108), das innerhalb des optischen Faserkabels (100) und um die Vielzahl von optischen Fasern (102a-102d; 102a-1021; 102a-102x) gefüllt ist, worin das Gel (108) ein thixotropes Gel ist und worin das thixotrope Gel das Eintreten von Wasser in den Kern des optischen Faserkabels (100) verhindert.

5. Optisches Faserkabel (100) nach Anspruch 1, ferner umfassend ein oder mehrere wasserquellbare Garne (110a-110c), die innerhalb des Kerns des optischen Faserkabels (100) positioniert sind.

6. Optisches Faserkabel (100) nach Anspruch 1, worin jede der Vielzahl von optischen Fasern (102a-102d; 102a-1021; 102a-102x) einen Durchmesser von zumindest einem von 200 Mikron und 250 Mikron hat.

7. Optisches Faserkabel (100) nach Anspruch 1, ferner umfassend eine Beschichtung über der Vielzahl von optischen Fasern (102a-102d; 102a-1021; 102a-102x), worin die Beschichtung aus einem Material hergestellt ist, das aus einer Gruppe ausgewählt ist, die aus raucharmem halogenfreiem Polyvinylchlorid, Polyamid 12, thermoplastischem Urethan und thermoplastischem Elastomer besteht.

8. Optisches Faserkabel (100) nach Anspruch 1, worin das optische Faserkabel (100) eine Zugfestigkeit von 70 Newton hat.

9. Optisches Faserkabel (100) nach Anspruch 1, worin das thermoplastische Material Polycarbonat ist.

10. Optisches Faserkabel (100) nach Anspruch 1, worin das Polymermaterial Polyamid-12 ist.

## Revendications

1. Cable à fibres optiques (100), comprenant :
une pluralité de fibres optiques (102a à 102d ; 102a à 1021 ; 102a à 102x) situées sensiblement le long d'un axe longitudinal du câble à fibres optiques (100) ;
une première couche (104) entourant la pluralité de fibres optiques (102a à 102d ; 102a à 1021 ; 102a à 102x) ; et
une seconde couche (106) ayant une dureté de 106 Rockwell entourant la première couche (104),
dans lequel
la première couche (104) est constituée d'un matériau thermoplastique, la première couche (104) a une épaisseur dans une plage de 0,2 à 0,3 millimètre, la seconde couche (106) est constituée d'un matériau polymère, dans lequel la seconde couche (106) a une épaisseur dans une plage de 0,2 à 0,3 millimètre, le câble à fibres optiques (100) a un diamètre dans une plage de 1,5 millimètre à 3 millimètres, le câble à fibres optiques (100) peut être soufflé sur 1,5 à 2 kilomètres, réussit l'essai de choc et a au plus un facteur de 85 pour cent,
**caractérisé en ce que** la première couche (104) a une dureté de 120 Rockwell et **en ce que** le câble à fibres optiques (100) a un poids dans une plage de 3-6 kg/km, une résistance à l'écrasement de 800 Newton/10 centimètres et une résistance aux chocs de 3 Nm.

2. Câble à fibres optiques (100) selon la revendication 1, dans lequel la première couche (104) a un premier diamètre d₁ dans une plage de 0,7 à 0,9 millimètre et un second diamètre d₂ dans une plage de 1,1 à 1,5 millimètre lorsqu'un nombre de la pluralité de fibres optiques (102a à 102d ; 102a à 1021 ; 102a à 102x) est égal à 4 et que chacune de la pluralité de fibres optiques (102a à 102d ; 102a à 1021 ; 102a à 102x) a un diamètre de 250 microns, dans lequel la première couche (104) a un premier diamètre d₁ dans une plage de 0,6 à 0,7 millimètre et un second diamètre d₂ dans une plage de 1,0 à 1,3 millimètre lorsqu'un nombre de la pluralité de fibres optiques (102a à 102d ; 102a à 1021 ; 102a à 102x) est égal à 4 et que chacune de la pluralité de fibres optiques (102a à 102d ; 102a à 1021 ; 102a à 102x) a un diamètre de 200 microns, dans lequel la première couche (104) a un premier diamètre d₁ dans une plage de 1,1 à 1,3 millimètre et un second diamètre d₂ dans une plage de 1,5 à 1,9 millimètre lorsqu'un nombre de la pluralité de fibres optiques (102a à 102d ; 102a à 1021 ; 102a à 102x) est égal à 12 et que chacune de la pluralité de fibres optiques (102a à 102d ; 102a à 1021 ; 102a à 102x) a un diamètre de 250 microns, dans lequel la première couche (104) a un premier diamètre d₁ dans une plage de 0,95 à 1,15 millimètre et un second diamètre d₂ dans une plage de 1,35 à 1,75 millimètre lorsqu'un nombre de la pluralité de fibres optiques (102a à 102d ; 102a à 1021 ; 102a à 102x) est égal à 12 et que chacune de la pluralité de fibres optiques (102a à 102d ; 102a à 1021 ; 102a à 102x) a un diamètre de 200 microns, dans lequel la première couche (104) a un premier diamètre d₁ dans une plage de 1,6 à 1,9 millimètre et un second diamètre d₂ dans une plage de 2 à 2,5 millimètres lorsqu'un nombre de la pluralité de fibres optiques (102a à 102d ; 102a à 1021 ; 102a à 102x) est égal à 24 et que chacune de la pluralité de fibres optiques (102a à 102d ; 102a à 1021 ; 102a à 102x) a un diamètre de 250 microns et dans lequel la première couche (104) a un premier diamètre d₁ dans une plage de 1,3 à 1,6 millimètre et un second diamètre d₂ dans une plage de 1,7 à 2,2 millimètres lorsqu'un nombre de la pluralité de fibres optiques (102a à 102d ; 102a à 1021 ; 102a à 102x) est égal à 24 et que chacune de la pluralité de fibres optiques (102a à 102d ; 102a à 1021 ; 102a à 102x) a un diamètre de 200 microns.

3. Câble à fibres optiques (100) selon la revendication 1, dans lequel la seconde couche (106) a un premier diamètre d₃ dans une plage de 1,5 à 2,1 millimètres lorsqu'un nombre de la pluralité de fibres optiques (102a à 102d ; 102a à 1021 ; 102a à 102x) est égal à 4 et que chacune de la pluralité de fibres optiques (102a à 102d ; 102a à 1021 ; 102a à 102x) a un diamètre de 250 microns, dans lequel la seconde couche (106) a un premier diamètre d₃ dans une plage de 1,4 à 1,9 millimètre lorsqu'un nombre de la pluralité de fibres optiques (102a à 102d ; 102a à 102d) est égal à 4 et que chacune de la pluralité de fibres optiques (102a à 102d ; 102a à 1021 ; 102a à 102x) a un diamètre de 200 microns, dans lequel la seconde couche (106) a un premier diamètre d₃ dans une plage de 1,9 à 2,5 millimètres lorsqu'un nombre de la pluralité de fibres optiques (102a à 102d ; 102a à 1021 ; 102a à 102x) est égal à 12 et que chacune de la pluralité de fibres optiques (102a à 102d ; 102a à 1021 ; 102a à 102x) a un diamètre de 250 microns, dans lequel la seconde couche (106) a un premier diamètre d₃ dans une plage de 1,75 à 2,35 millimètres lorsqu'un nombre de la pluralité de fibres optiques (102a à 102d ; 102a à 1021 ; 102a à 102x) est égal à 12 et que chacune de la pluralité de fibres optiques (102a à 102d ; 102a à 1021 ; 102a à 102x) a un diamètre de 200 microns, dans lequel la seconde couche (106) a un premier diamètre d₃ dans une plage de 2,4 à 3,1 millimètres lorsqu'un nombre de la pluralité de fibres optiques (102a à 102d ; 102a à 1021 ; 102a à 102x) est égal à 24 et que chacune de la pluralité de fibres optiques (102a à 102d ; 102a à 1021 ; 102a à 102x) a un diamètre de 250 microns et dans lequel la seconde couche (106) a un premier diamètre d₃ dans une plage de 2,1 à 2,8 millimètres lorsqu'un nombre de la pluralité de fibres optiques (102a à 102d ; 102a à 1021 ; 102a à 102x) est égal à 24 et que chacune de la pluralité de fibres optiques (102a à 102d ; 102a à 1021 ; 102a à 102x) a un diamètre de 200 microns.

4. Câble à fibres optiques (100) selon la revendication 1, comprenant en outre un gel (108) rempli à l'intérieur du câble à fibres optiques (100) et autour de la pluralité de fibres optiques (102a à 102d ; 102a à 1021 ; 102a à 102x), dans lequel le gel (108) est un gel thixotrope et dans lequel le gel thixotrope empêche la pénétration d'eau à l'intérieur du noyau du câble à fibres optiques (100).

5. Câble à fibres optiques (100) selon la revendication 1, comprenant en outre un ou plusieurs fils gonflables à l'eau (110a à 110c) positionnés à l'intérieur du noyau du câble à fibres optiques (100).

6. Câble à fibres optiques (100) selon la revendication 1, dans lequel chacune de la pluralité de fibres optiques (102a à 102d ; 102a à 1021 ; 102a à 102x) a un diamètre d'au moins l'un de 200 microns et 250 microns.

7. Câble à fibres optiques (100) selon la revendication 1, comprenant en outre un revêtement sur la pluralité de fibres optiques (102a à 102d ; 102a à 1021 ; 102a à 102x), dans lequel le revêtement est constitué d'un matériau choisi dans un groupe constitué d'une faible émission de fumée sans halogène, de chlorure de polyvinyle, de polyamide 12, d'uréthane thermoplastique et d'élastomère thermoplastique.

8. Câble à fibres optiques (100) selon la revendication 1, dans lequel le câble à fibres optiques (100) a une résistance à la traction de 70 Newton.

9. Câble à fibres optiques (100) selon la revendication 1, dans lequel le matériau thermoplastique est du polycarbonate.

10. Câble à fibres optiques (100) selon la revendication 1, dans lequel le matériau polymère est un polyamide-12.
